# EUROPEAN PATENT SPECIFICATION

(11) **EP 0 797 136 B1**
(45) Date of publication and mention of the grant of the patent: **30.08.2000**
(21) Application number: 97830032.5
(22) Date of filing: 31.01.1997
(51) Int. Cl.: G05D 23/13

(54) **Thermostatic mixer for plumbing systems**
Thermostatische Mischarmatur für Sanitäranlagen
Mitigeur thermostatique pour installations sanitaires

(30) Priority: 22.03.1996 IT BS960023
(43) Date of publication of application: 24.09.1997
(73) Proprietor: Zipponi Rubinetterie S.n.c. di Nember Oscar & C., 25050 Rodengo Saiano (Brescia) (IT)
(72) Inventor: Nember, Oscar, 25050 Paderno Franciacorta (Brescia) (IT)
(74) Representative: Manzoni, Alessandro

(56) References cited:
- CH-A- 348 018
- DE-A- 4 237 435
- DE-A- 4 423 240
- GB-A- 675 493
- US-A- 5 356 074

## Description

The present invention pertains to thermostatic mixers for plumbing systems.

These mixer taps usually comprise a body with a cold-water inlet passage, a hot-water inlet passage and a water outlet towards the user appliance under the control of an interception valve, for example of the headwork type. They incorporate a thermostatic mixer unit as well that is crossed by the two types of water and that allows setting and checking the temperature of the water directed to the outlet. Said thermostatic unit is generally in the form of a cartridge inserted in the mixer body on the side of the water inlet, see for example GB 675493A and DE 4237435A.

Generally, cold water passes from the appropriate inlet passage to the thermostatic unit; hot water is conveyed from the appropriate inlet passage to the thermostatic unit by means of a pipe; then the water to be delivered is taken from the thermostatic unit to the outlet by means of another pipe.

The body of the mixer essentially comprises a block supporting the thermostatic unit and a block supporting the interception valve connected together by the pipes for the hot water and for the water to be delivered, all enclosed in a shell or outer finishing jacket.

According to the known executions, the two blocks of the body and the pipes are made of metal, normally brass. In a special execution proposed by the applicant, the two blocks of the body are made of metal and the pipes are made of plastic.

In any case, however, the thermostatic unit is in the form of an independent cartridge with an appropriate shell in which the functional organs are arranged and supported, including the thermal sensor, which allow controlling the temperature of the water to be delivered. In other words, the thermostatic unit is a unit in itself, preassembled and then inserted in a corresponding housing provided in the body of the mixer.

It is an object of the present invention to propose a thermostatic mixer of the type described above in which a block of its body is at the same time also a shell for the components of the thermostatic unit.

An additional object of this invention is to propose a thermostatic mixer in which one or better both blocks of its body are made of plastic material.

Therefore, and advantageously, on the one hand the shell of the thermostatic unit and the sensor are eliminated, and on the other hand its functional components can be placed and assembled directly in the body of the mixer. In addition, the body made of plastic material offers anti-scorching properties, it is easy to make and is more reliable against corrosion and scale deposits.

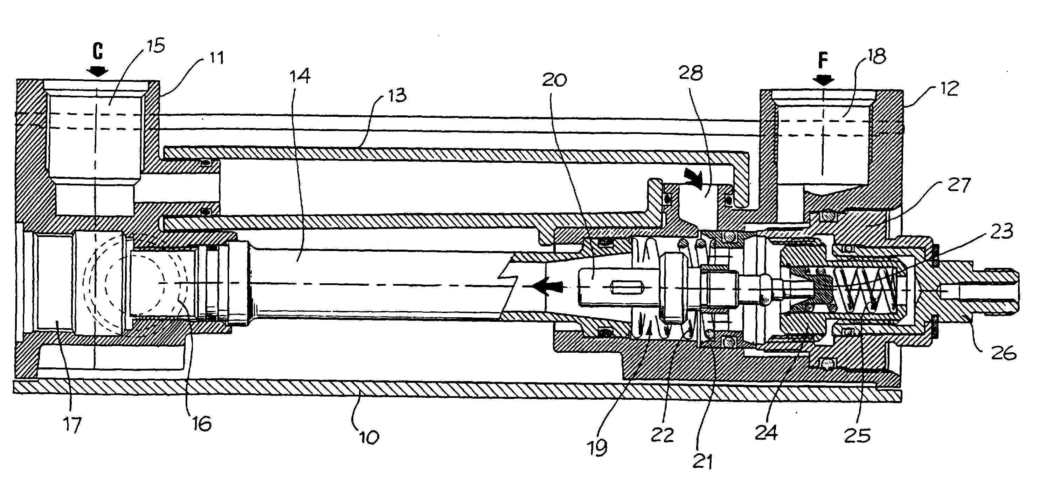

The invention will however described in greater detail hereunder, by making reference to the accompanying drawing, which illustrates a longitudinal sectional view of the thermostatic mixer.

The body of this thermostatic mixer therefore comprises, contained in a shell or jacket 10, a body composed of a first block 11 and a second block 12 connected by a first pipe 13 and by a second pipe 14 preferably made of plastic material. The first block 11 has a passage 15 for the inlet of hot water C, it is provided with a water outlet 16 and with an interception valve--not shown--which is designed to be inserted in a housing 17. The second block 12 has a passage 18 for the inlet of cold water F and incorporates a thermostatic unit 19.

Both blocks 11, 12 are made of plastic material, and in particular the second block 12 is the shell in which the components of the thermostatic unit 19 are mounted and organized. This comprises, in a known manner, a thermal sensor 20, an axially mobile sensor-carrier 21, a spring 22 for the sensor, a plug 23 supporting the sensor, a valve 24 for positioning the sensor, a contrast spring 25, a rotating control rod 26 and a body 27 housing the valve 24 and the control rod.

The cold-water inlet passage 18 communicates directly with the thermostatic unit through the sensor-carrier 21. The first pipe 13 connects the hot-water inlet passage 15 with the thermostatic unit also through the sensor-carrier 21, said pipe 13 being connected, on one side, to the first block 11 and, on the other side, to the second block 12 at the level of a union 28 oriented radially to the sensor-carrier 21. The second pipe 14 runs from the second block 12 to the first block 11 to carry the outlet water of the thermostatic unit 19 to the delivery outlet 16.

## Claims

1. A thermostatic mixer for hot and cold water comprising a body composed of two blocks (11, 12) connected by a first and a second pipe (13, 14) and where a first block (11) has a hot-water inlet passage (15) and is provided with a water outlet (16) and with an interception valve, the second block (12) has a cold-water inlet passage (18) and bears a thermostatic unit (19) that communicates with said cold-water inlet passage directly, with the hot-water inlet passage through a first pipe (13) and with the water outlet through a second pipe (14), **characterized in that** said second block (12) of the body is at the same time a shell in which the components of the thermostatic unit are mounted and organized directly.

2. A thermostatic mixer according to claim 1, wherein at least said second block (12) of the body is made of plastic material.

3. A thermostatic mixer according to claim 2, wherein said blocks (11, 12) of the body are made of plastic material.

4. A thermostatic mixer according to claim 1, wherein said blocks (11, 12) of the body and said pipes are made of plastic material.

5. A thermostatic mixer according to any of the above claims, wherein said first pipe (13) starts from the first block and joins up with a portion of the pipe of the second block oriented radially to the thermostatic unit housed directly in said second block.

## Patentansprüche

1. Ein thermostatischer Mischer für Warm- und Kaltwasser, welcher einen aus zwei Blöcken (11, 12) bestehenden Körper enthält. Die Blöcke sind durch ein erstes und ein zweites Rohr (13, 14) verbunden. Der erste Block (11) weist einen Warmwasser-Eintrittsdurchgang (15) auf und ist sowie mit einem Wasserauslauf (16) und einem Sperrventil versehen. Der zweite Block (12) weist einen Kaltwasser-Eintrittsdurchgang (18) und stützt eine thermostatische Einheit (19), die mit dem obengenannten Kaltwasser-Eintrittsdurchgang direkt verbunden ist; der Warmwasser-Eintritt erfolgt durch ein erstes Rohr (13) und der Wasserauslauf durch ein zweites Rohr (14). Der zweite Block (12) des Körpers fungiert gleichzeitig als Gehäuse, in dem die Bestandteile der thermostatischen Einheit montiert und angeordnet sind.

2. Ein thermostatischer Mischer entsprechend Anspruch 1, bei dem mindestens der obengenannte zweite Block (12) des Körpers aus Kunststoff besteht.

3. Ein thermostatischer Mischer entsprechend Anspruch 2, bei dem die obengenannten Blöcke (11, 12) des Körpers aus Kunststoff bestehen.

4. Ein thermostatischer Mischer entsprechend Anspruch 1, bei dem die obengenannten Blöcke (11, 12) des Körpers und die oben genannten Rohre aus Kunststoff bestehen.

5. Ein thermostatischer Mischer entsprechend irgendeiner der obengenannten Ansprüche, bei dem das erste Rohr (13) im ersten Block beginnt und sich mit einem Teil des Rohrs des zweiten Blocks verbindet, der rechtwinklig zur im obengenannten zweiten Block befindlichen thermostatischen Einheit steht.

## Revendications

1. Un mélangeur thermostatique pour eau chaude et froide comprenant un corps formé de deux blocs (11, 12) reliés par deux tubes (13, 14); le premier bloc (11) présente un orifice d'entrée (15) pour l'eau chaude et un orifice de sortie de l'eau (16) et est doté d'une vanne d'arrêt, alors que le deuxième bloc (12) présente un orifice d'entrée (18) pour l'eau froide et porte une unité thermostatique (19) qui communique directement avec ledit orifice d'entrée de l'eau froide, à travers un premier tube (13) avec l'orifice d'entrée de l'eau chaude et à travers un deuxième tube (14) avec l'orifice de sortie de l'eau; il se caractérise par le fait que le deuxième bloc (12) dudit corps est en même temps une enveloppe dans laquelle les composants de l'unité thermostatique sont montés et disposés directement.

2. Un mélangeur thermostatique répondant à la revendication 1 dans lequel au moins le deuxième bloc (12) du corps est réalisé en matière plastique.

3. Un mélangeur thermostatique répondant à la revendication 2 dans lequel les blocs (11, 12) du corps sont réalisés en matière plastique.

4. Un mélangeur thermostatique répondant à la revendication 1 dans lequel les blocs (11, 12) du corps et les tubes sont réalisés en matière plastique.

5. Un mélangeur thermostatique répondant à une des revendications ci-dessus quelle qu'elle soit dans lequel le premier tube (13) part du premier bloc et rejoint un tronçon du tube du deuxième bloc orienté radialement par rapport à l'unité thermostatique logée directement dans le deuxième bloc.
